(19) Europäisches Patentamt

European Patent Office

Office européen des brevets

(11) **EP 0 802 158 A2**

(12) **EUROPÄISCHE PATENTANMELDUNG**

(43) Veröffentlichungstag:
**22.10.1997 Patentblatt 1997/43**

(21) Anmeldenummer: **97104688.3**

(22) Anmeldetag: **19.03.1997**

(51) Int. Cl.$^6$: **C01B 13/20**, C01G 23/07,
C01B 33/18, C01F 7/30,
C09D 7/00

(84) Benannte Vertragsstaaten:
**BE DE FR GB NL**

(30) Priorität: **17.04.1996 DE 19615111**

(71) Anmelder: **Degussa Aktiengesellschaft**
**60387 Frankfurt am Main (DE)**

(72) Erfinder:
• **Mangold, Helmut, Dr.**
**63517 Rodenbach (DE)**
• **Riemenschneider, Herbert, Dr.**
**63571 Gelnhausen (DE)**
• **Die andere Erfinder haben auf ihre Nennung verzichtet**

(54) **Oxide und Verfahren zu deren Herstellung**

(57) Oxide, hergestellt mittels Flammenhydrolyse, weisen die folgenden Strukturparameter nach Schulz et al. auf:

$A_{circle}/A_{object}$ größer als 6
Derivate Length D1 größer als 10

Die Oxide werden hergestellt, indem man flüchtige Metall- und/oder Metalloidverbindungen in einer Flamme hydrolysiert. Der Gas- beziehungsweise Gas/Partikelstrom wird dabei durch von außen induziertes elektrisches Feld geführt. Die Oxide weisen eine verbesserte Verdickungswirkung in flüssigen oder pastösen Systemen, wie zum Beispiel Lacken, auf.

EP 0 802 158 A2

**Beschreibung**

Die Erfindung betrifft Oxide, ein Verfahren zur Herstellung der Oxide sowie deren Verwendung.

Es ist bekannt, Oxide herzustellen, indem man flüchtige Metall- und/oder Metalloidverbindungen in einer Flamme mittels Flammenhydrolyse hydrdolysiert. Dabei werden die flüchtigen Verbindungen im Gemisch mit unter Wasserbildung verbrennenden Gasen und Sauerstoff der Flamme zugeführt (AT-A 195 893, DE-A 830 786, DE-A 974 793).

Bei den bekannten Verfahren ist es notwendig, die Oxidpartikel in der Zersetzungszone bei Temperaturen oberhalb des Taupunktes des Wassers bzw. der Salzsäure oder anderer leicht kondensierbarer Nebenprodukte abzuscheiden und diese Oxidpartikel so abzuscheiden, daß sie nicht noch einmal durch die Zersetzungszone geführt werden, denn dadurch werden Kornvergrößerungen und Sinterungen hervorgerufen, während unterhalb des Taupunktes durch Kondensation von Wasser, Salzsäure oder dergleichen ebenfalls grobkörnigere Partikel erhalten werden, die jedoch unerwünschte Eigenschaften aufweisen.

Die nach den bekannten Verfahren primär hergestellten Oxidpartikel weisen eine mittlere Teilchengröße im Nanometerbereich auf. Sie agglomerieren aufgrund der Kollision der bereits vorhandenen Primärpartikel zu Sekundärstrukturen und zeichnen sich durch niedrige Schüttgewichte aus. Die Agglomeration der Primärpartikel und damit die Struktur der Sekundärteilchen wird im wesentlichen durch die stoffspezifische und auch temperaturabhängige Diffusion der Primärpartikel bestimmt.

Gegenstand der Erfindung sind Oxide, hergestellt mittels Flammenhydrolyse, welche dadurch gekennzeichnet sind, daß die Strukturparameter nach Schulz et al. die folgenden Werte aufweisen:

$A_{circle}/A_{object}$ größer als 6
Derivate Length D1 größer als 10

In einer bevorzugten Ausführungsform der Erfindung kann der Wert von $A_{circle}/A_{object}$ im Bereich zwischen 8 und 12 und der Wert der Derivative Length im Bereich zwischen 10 und 20 liegen.

Die erfindungsgemäßen Oxide können beispielsweise durch die Flammenhydrolyse der Verbindungen Titantetrachlorid, Aluminiumtrichlorid, verdampfbaren Borverbindungen oder Siliciumtetrachlorid hergestellt werden.

Ihre stöchiometrische Zusammensetzung entspricht den bekannten, pyrogen hergestellten Oxiden.

Durch das gleichzeitige Hydrolysieren von verschiedenen flüchtigen Verbindungen können die entsprechenden Mischoxide hergestellt werden.

Gegenstand der Erfindung ist ein Verfahren zur Herstellung der Oxide durch hydrolytische Umsetzung flüchtiger Metall- und/oder Metalloidverbindungen in einer Flamme, wobei die flüchtigen Verbindungen einzeln oder gemischt im Gemisch mit unter Wasserbildung verbrennenden Gasen und Sauerstoff der Flamme zugeführt werden, wobei solche Mengen an Sauerstoff und brennbarem Gas, daß der Sauerstoffgehalt der Mischung zur vollständigen Verbrennung des brennbaren Gases mindestens ausreicht und das dabei gebildete Wasser zur Hydrolyse der flüchtigen Verbindung mindestens ausreicht, mit der flüchtigen Verbindung homogen gemischt werden und das Gemisch anschließend in einer laminaren oder turbulenten Strömung zur und in der Flamme in dieser zur Umsetzung gebracht wird, welches dadurch gekennzeichnet ist, daß man während der Flammenhydrolyse extern induzierte elektrische Kräfte einwirken läßt.

In einer Ausführungsform der Erfindung kann man extern induzierte elektrische Kräfte während der Abkühlphase auf die gebildeten Oxidpartikel einwirken lassen.

In einer weiteren Ausführungsform der Erfindung kann man extern induzierte elektrische Kräfte an einer beliebigen Stelle der laminaren oder turbulenten Strömung vor, während und/oder nach der Bildung der Oxidpartikel einwirken lassen.

Insbesondere ist es wesentlich, daß die extern induzierten elektrischen Kräfte während der Partikelbildung einwirken können.

Als flüchtige Metallverbindungen können beispielsweise eingesetzt werden:

Titantetrachlorid, Aluminiumtrichlorid, verdampfbare flüchtige Borverbindungen, wie Borhalogenide oder Borsäureester.

In einer bevorzugten Ausführungsform der Erfindung kann als flüchtige Metallverbindung Titantetrachlorid eingesetzt werden, wobei ein Titandioxid hergestellt wird.

Als flüchtige Metalloidverbindungen können beispielsweise eingesetzt werden:

Siliciumtetrachlorid, organische Siliciumverbindungen, Organosiliciumhalogenverbindungen.

Die flüchtigen Metallverbindungen und/oder flüchtigen Metalloidverbindungen können erfindungsgemäß auch in beliebiger Mischung eingesetzt werden. Die erhaltenen Oxide stellen dann Mischoxide dar.

Als brennbares Gas kann beispielsweise eingesetzt werden:

Wasserstoff, niedrig siedende Alkane, wie zum Beispiel Methan, Ethan, Gemisch aus $H_2$ und CO.

Die extern induzierten elektrischen Kräfte können erfindungsgemäß mittels dem in dem Dokument DE-A 44 00 827 beschriebenen Verfahren und der ebenfalls in diesem Dokument DE-A 44 00 827 beschriebenen Vorrichtung erzeugt werden.

Erfindungsgemäß wird demnach die laminare oder turbulente Strömung, die bereits erzeugte Primärteilchen enthalten kann, durch einen geschlossenen Strömungskanal geführt. Dabei wird ein elektrisches Feld, das zu Ionisation des den Strömungskanal durchströmenden Gases geeignet ist, in den Strömungskanal mittels zumindest eines Elektrodenpaares eingekoppelt. Die Elektroden eines jeden Elektrodenpaares liegen sich im Strömungskanal gegenüber und können bevorzugt nadelförmig ausgebildet sein. Die Elektroden sind erdfrei geschaltet. Die Ionisation des Gases findet zwischen Elektroden entgegengesetzter Polarität statt. Die Agglomeration der gebildeten Oxidpartikel im Strömungskanal kann in Bereichen ohne äußeres elektrisches Feld erfolgen. Im Falle einer gewünschten Dotierung der Oxide mit feinstteiligem Elektrodenmaterial und/oder dessen Oxiden kann man auch während der Agglomeration der gebildeten Oxidpartikel ein äußeres elektrisches Feld einwirken lassen.

Das erfindungsgemäße Verfahren kann bevorzugt in einer Vorrichtung durchgeführt werden, die die folgenden Merkmale aufweist:

Geschlossener Strömungskanal mit zumindest einem in dem Strömungskanal angeordneten Elektrodenpaar sowie einer mit dem oder den Elektrodenpaaren verbundenen Stromquelle, deren Stärke zur Erzeugung von Koronaentladungen zwischen den Elektroden jedes Elektrodenpaares ausreicht, wobei die Elektroden eines jeden Elektrodenpaares sich gegenüberliegend im Strömungskanal angeordnet und nadelförmig ausgebildet sind, die Elektroden gegenüber der Wandung des Strömungskanals isoliert und zusätzlich erdfrei geschaltet sind und die Koronaentladung zwischen Elektroden entgegengesetzter Polarität stattfindet.

Durch das erfindungsgemäße Verfahren können zusätzlich nanoskalige Metall(oxid?)partikel auf die Oberfläche der Oxidpartikel aufgebracht werden. Die Aufbringung der Metallpartikel erfolgt durch Koronaentladung an mindestens einer Metallelektrode, die auf Gleich- bzw. Wechselstrompotential geschaltet ist.

Der Partikelaufladung mittels Koronaentladung liegen folgende physikalische Vorgänge zugrunde:

Durch die Wirkung einer von außen angelegten elektrischen Gleichspannung entstehen bei entsprechender Geometrie der „Sprühelektrode" (kleiner Krümmungsradius) lokal sehr hohe elektrische Feldstärken, die zur Ionisation des Gases führen. Die so erzeugten Gasionen und freie Elektronen bewirken dann durch Kollision mit den Partikeln deren Aufladung. Man unterscheidet zwei Aufladungsmechanismen:

Die Feldaufladung, bei der die Ladungsträger unter der Wirkung des elektrischen Feldes auf die Partikeln zudriften, und die Diffusionsaufladung, bei der die thermisch-diffusive Bewegung der Ladungsträger und Partikeln maßgeblich für die Kollision ist.

In dem erfindungsgemäß relevanten Partikelgrößenbereich unterhalb von 1,0 $\mu$m dominiert die Diffusionsaufladung, bei der die Präsenz externer elektrischer Felder für die Aufladung der Partikeln von untergeordneter Bedeutung ist. Daraus folgt, daß die Sprühelektrode bei der Konditionierung während der Durchführung des erfindungsgemäßen Verfahrens lediglich zur Freisetzung von Ladungsträgern dient.

Bei der Verwendung von zwei gegenüberliegend angeordneten Sprühelektroden kann durch die Variation des elektrischen Potentials der Elektroden die Polarität der resultierenden Partikelladung eingestellt werden.

Als Sprühelektroden werden zwei nadelförmig ausgebildete metallische Drähte, die sich zentral gegenüberstehen, verwendet. Die Nadelelektroden werden jeweils getrennt an ein Gleichstrom-Hochspannungsnetzgerät positiver ($U_+$) bzw. negativer Polarität ($U_-$) angeschlossen. Beim Überschreiten der Koronaeinsatzspannung kommt es zu einer makroskopisch stabilen Koronaentladung an den Spitzen der Elektroden. Bei symmetrisch bipolarer Beschaltung (Potentialverhältnis $U_+/|U_-|=1$) resultiert eine bipolare Koronaentladung. Dementsprechend sind im Gasraum sowohl positiv als auch negativ geladene Partikeln vorhanden. Bei unipolar positiver Beschaltung $U_+>>|U_-|$ dominieren positiv geladene Partikeln im Gasraum. Bei unipolar negativer Beschaltung $U_+<<|U_-|$ sind vorweigend negativ geladene Partikeln im Gasraum präsent.

Während der Koronaentladung emittieren die Nadelelektroden neben Ionen und freien Elektronen auch feinstdisperses Elektrodenmaterial. Dieses, von den Elektroden in Form von nanoskaligen, elektrisch aufgeladenen Partikeln emittierte Material, lagert sich aufgrund starker attraktiver elektrischer Wechselwirkungen umgehend an den erfindungsgemäß in der Flamme vorhandenen Partikeln an. Somit erfolgt eine „Dotierung" der Produktpartikeln mit nanoskaligem Elektrodenmaterial. Die Menge von emittiertem Material ist abhängig von den physikalischen Eigenschaften der Elektrode, insbesondere von deren Schmelzpunkt. Es wird davon ausgegangen, daß Metalle mit niedrigem Schmelzpunkt mehr Substanz emittieren als Metalle mit hohem Schmelzpunkt. Bei entsprechender Wahl des Elektrodenmaterials kann also eine gezielte Beeinflussung der emittierten Elektrodenmenge und Substanz erfolgen.

Die elektrische Konditionierung mittels Koronaentladung beeinflußt daher nicht nur die Aggregatstruktur sondern auch, in geringem Umfang, die chemische Zusammensetzung des Produktes.

Unter dem Einfluß einer unipolar negativen Koronaentladung im Bereich der Flamme wird eine Veränderung der Produkteigenschaften bezüglich folgender Merkmale festgestellt:

- Weißgrad nach Berger
- Verdickungswirkung
- Partikelstruktur

- Dispersität
- Effektivität
- Partikelladung im wäßrigen System

Insbesondere weisen die erfindungsgemäß hergestellten Oxide wie das Titandioxid eine verbesserte Verdickungswirkung auf.

Ein weiterer Gegenstand der Erfindung ist die Verwendung der erfindungsgemäßen Oxide als Verdickungsmittel in flüssigen oder pastösen Systemen, wie zum Beispiel Lacken.

In einer bevorzugten Ausführungsform der Erfindung kann als flüchtige Metallverbindung Titantetrachlorid eingesetzt werden, wobei ein Titandioxid hergestellt wird.

Ein weiterer Gegenstand der Erfindung ist ein Titandioxid, hergestellt mittels Flammenhydrolyse, welches dadurch gekennzeichnet ist, daß die Strukturparameter nach Schulz et al., publiziert in „A new method of agglomerate characterization by image analysis" auf PARTEC '95 - 6th European Symposium Particle Characterization, 21. - 23. März 1995, Nürnberg, die folgenden Werte haben:

$A_{circle}/A_{object}$ größer als 6, Derivate Length D1 größer als 10. In einer bevorzugten Ausführungsform kann der Wert von $A_{circle}/A_{object}$ im Bereich zwischen 8 und 12 und der Wert der Derivate Length im Bereich zwischen 10 und 20 liegen.

In einer bevorzugten Ausführungsform der Erfindung kann das Titandioxid einen Weißgrad nach Berger von größer als 93 aufweisen.

Bei dem erfindungsgemäßen Titandioxid kann die Oberflächenladung einer 20 %igen wäßrigen Suspension des Titandioxides bei pH 3 zu mehr als 6 C/g und bei pH 10 zu weniger als -5 C/g bestimmt werden.

Die Viskosität einer 10 %igen wäßrigen Suspension des erfindungsgemäßen Titandioxides kann größer als 5 mPas, bevorzugt größer als 10 mPas, sein.

Das erfindungsgemäße Titandioxid kann mit feinstteiligem Elektrodenmaterial und/oder dessen Oxiden dotiert sein.

Die OH-Gruppendichte auf der Partikeloberfläche des erfindungsgemäßen Titandioxides kann gegenüber dem bekannten, pyrogen hergestellten Titandioxid verändert sein.

## Beispiele

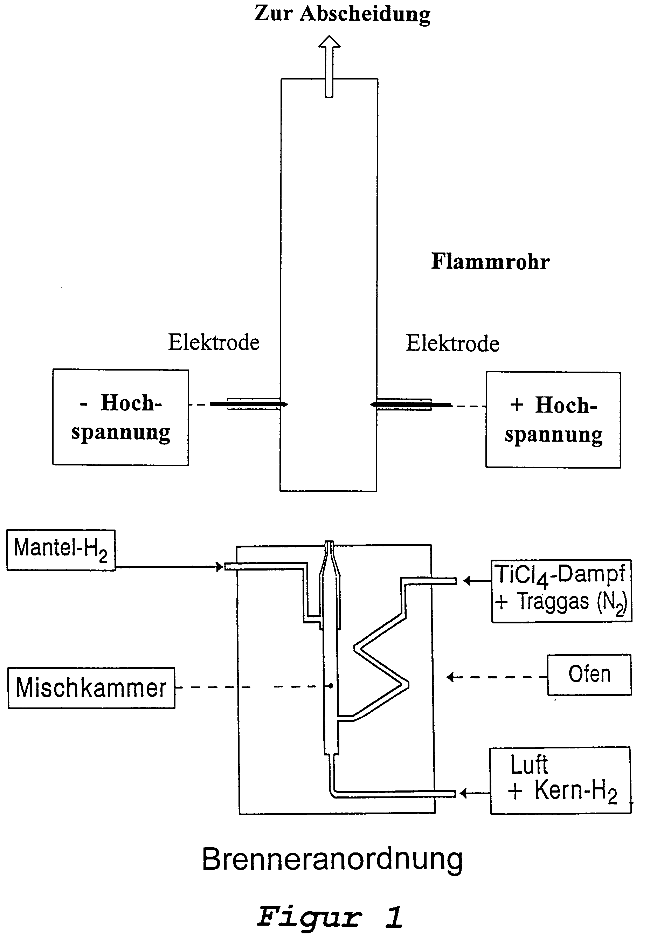

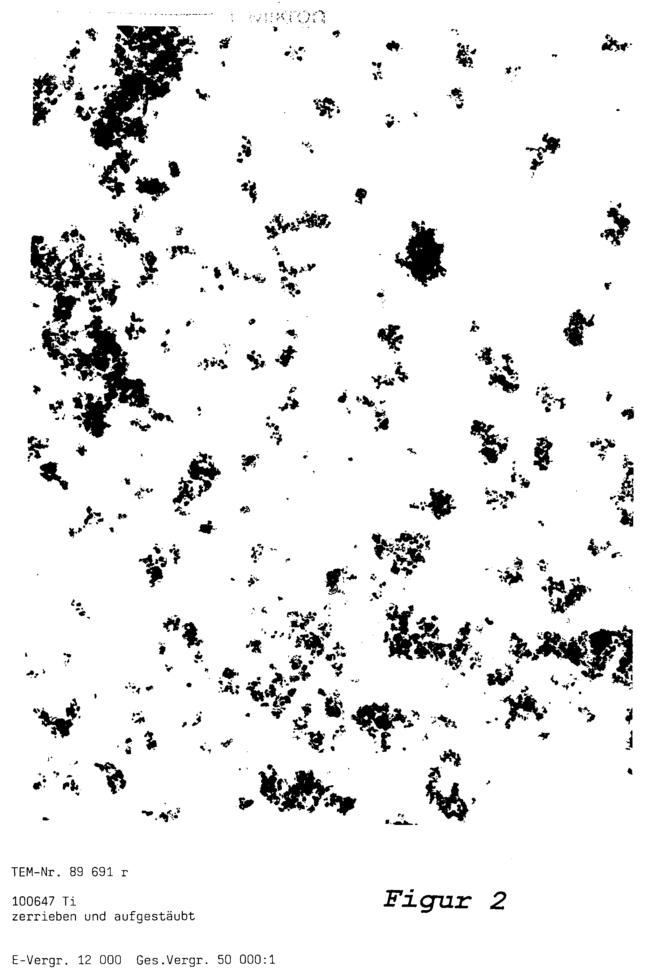

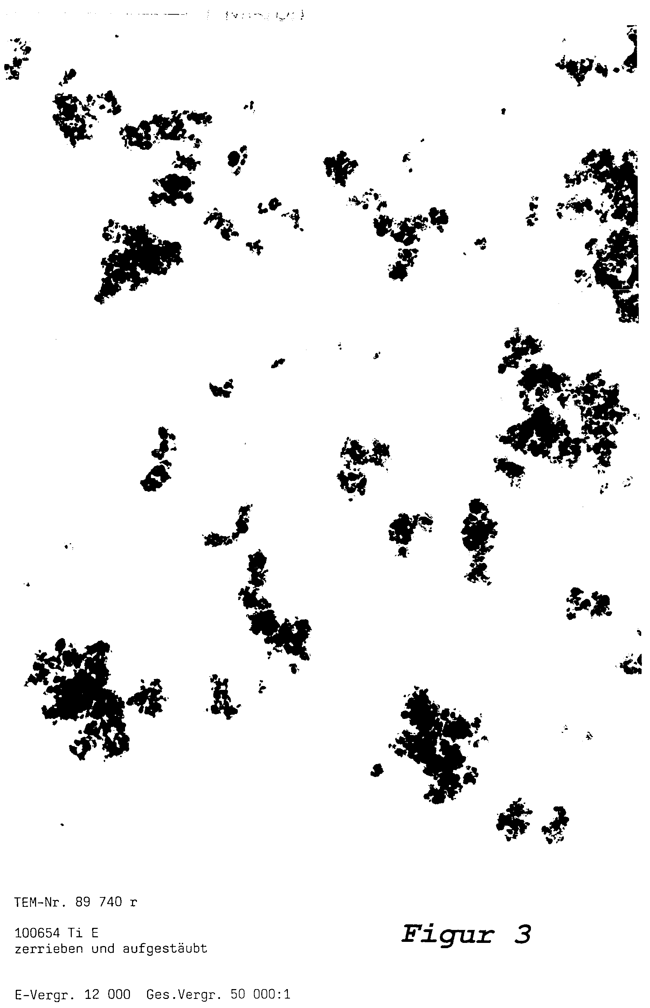

Die Brenneranordnung für das Beispiel und das Vergleichsbeispiel ist schematisch in Figur 1 dargestellt (Brenneranordnung).

Der Brenner befindet sich in einem beheizten Ofenteil, die Temperatur des Ofens entspricht in etwa der Ausströmtemperatur des Gasgemisches. Der Brenner besteht aus einer Mischkammer, an die sich eine Düse, aus der das Gasgemisch ausströmt, anschließt, sowie einen um diese Düse ringförmig liegende zweite (Mantel-)Düse, aus der zur Vermeidung von Anbackungen (im Düsenbereich) zusätzlich (Mantel-)Wasserstoff in die Flamme geblasen wird.

## Beispiel 1

1,335 kg/h $TiCl_4$ werden bei ca. 160 °C verdampft und mit 0,04 $Nm^3$/h Stickstoff als Traggas in die Mischkammer des Brenners überführt. In die gleiche Mischkammer werden 2,675 $Nm^3$/h Luft und 0,307 $Nm^3$/h (Kern-)Wasserstoff eingespeist.

Das Gasgemisch strömt mit einer Geschwindigkeit von 31,27 m/sec (bezogen auf Normbedingungen) aus der Düsenöffnung des Brenners und brennt in eine Reaktionskammer (Flammrohr).

Am Brennermund wird die Temperatur des Gasgemisches ($TiCl_4$-Luft-Wasserstoff, Sauerstoff) gemessen; sie beträgt 155 °C. In die den Brennermund umgebende Ringdüse werden 0,1 $Nm^3$/h Wasserstoff (Mantelwasserstoff, Raumtemperatur) eingespeist.

Nach der Flammenhydrolyse werden die Reaktionsgase und das Titanoxid durch Anlegen eines Unterdruckes durch ein Kühlsystem gesaugt und dabei auf ca. 100 bis 160 °C abgekühlt. In einem Filter wird der Feststoff von dem Abgasstrom abgetrennt. Das Titanoxid fällt als weißes feinteiliges Pulver an.

## Beispiel 2

1,332 kg/h $TiCl_4$ werden bei ca. 160 °C verdampft und mit 0,04 $Nm^3$/h Stickstoff als Traggas in die Mischkammer des Brenners überführt. In die gleiche Mischkammer werden 2,675 $Nm^3$/h Luft und 0,307 $Nm^3$/h (Kern-)Wasserstoff eingespeist.

Das Gasgemisch strömt mit einer Geschwindigkeit von 31,27 m/sec (bezogen auf Normbedingungen) aus der Düsenöffnung des Brenners und brennt in eine Reaktionskammer (Flammrohr).

Am Brennermund wird die Temperatur des Gasgemisches ($TiCl_4$-Luft-Wasserstoff, Sauerstoff) gemessen; sie beträgt 155 °C. In die den Brennermund umgebende Ringdüse werden 0,1 Nm$^3$/h Wasserstoff (Mantelwasserstoff, Raumtemperatur) eingespeist.

Bei dieser Vergleichsprobe ist 55 mm oberhalb des Brennermundes ein Nadelelektrodenpaar (Elektrodenmaterial: Wolfram) senkrecht zur Hauptströmungsrichtung positioniert. Der Abstand der Nadelspitzen beträgt 30 mm. Das Potential der negativen Elektrode ist -24.000 V, das der positiven +1.000 V. Der Strom liegt im Bereich zwischen 0,04 mA und 0,08 mA.

Nach der Flammenhydrolyse und der elektrischen Beeinflussung werden die Reaktionsgase und das Titanoxid durch Anlegen eines Unterdruckes durch ein Kühlsystem gesaugt und dabei auf ca. 100 bis 160 °C abgekühlt. In einem Filter wird der Feststoff von dem Abgasstrom abgetrennt. Das Titanoxid fällt als weißes feinteiliges Pulver an.

*Beispiel 1*

| TiO$_2$-Standard (100647 Ti) | |
|---|---|
| - Weißgrad nach Berger: | 90,82 |
| - Verdickungswirkung nach 24 h in 10 %iger wäßriger Dispersion: | 2 m Pa s |
| - Dispersität: | siehe Figur 2 |
| - Effektivität gemäß DE-A 44 00 170: | 655 |
| - Strömungspotential (Oberflächenladung): | entsprechend Figur 4 |

*Beispiel 2*

| TiO$_2$ (erfindungsgemäß hergestellt) (100654 TiE) | |
|---|---|
| - Weißgrad nach Berger: | 95,68 |
| - Verdickungswirkung nach 24 h in 10 %iger wäßriger Dispersion: | 14 m Pa s |
| - Dispersität: | siehe Figur 3 |
| - Effektivität gemäß DE-A 44 00 170: | 740 |
| - Strömungspotential (Oberflächenladung): | entsprechend Figur 5 |

Die Strukturparameter nach Schulz et al. sind für das Titandioxid gemäß Beispiel 1 (TiO$_2$-Standard):

$A_{circle}/A_{object}$ zwischen 2 und 6
Derivative Length zwischen 4 und 16

Die Strukturparameter nach Schulz et al. sind für das Titandioxid gemäß Beispiel 2 (erfindungsgemäßes Titandioxid):

$A_{circle}/A_{object}$ zwischen 8 und 12
Derivative Length zwischen 10 und 20

Tabelle 1

| Prü-fung | | Einheit | Beispiel 1 100 647 Ti | Beispiel 2 100 654 Ti E |
|---|---|---|---|---|
| T 950 | Effektivität | | 609 | 731 |
| T 960 | | | | |
| O 975 | Effektivität (UT) | | 655 | 740 |
| | Sediment (Effekt., Diss.) | Vol.% | 0 | 0 |
| | Verdickungswirkung, 5%ig[1] sofort | m Pas | 2 | 2 |
| | nach 2 h | m Pas | 2 | 2 |
| | nach 24 h | m Pas | 2 | 2 |
| | Verdickungswirkung, 10%ig[2] sofort | m Pas | 2 | 6 |
| | nach 2 h | m Pas | 2 | 8 |
| | nach 24 h | m Pas | 2 | 14 |

[1] 190 g dest. Wasser und 10 g Titandioxid werden mit einem Dissolver 5 Minuten bei 2000 U/min dispergiert. Die Viskosität wird mit einem Brookfield Viskosimeter (Spindel 1,5 U/min) sofort nach Dispergierende bzw. nach 2 und 24 h Standzeit gemessen.

[2] Die wie unter [1] beschrieben hergestellten Dispersionen werden durch Zugabe von Titanoxid auf 10 % aufkonzentriert, 5 Minuten bei 2000 U/min dispergiert und wie oben beschrieben vermessen.

EP 0 802 158 A2

*Tabelle 2*

| Versuchs-Nr. | Sears-Zahl (ml/2g EW) | pH (4g EW) | Schütt-dichte (g/l) | Stampf-dichte (g/l) | TV (G-%) | GV (G-%) | Weißgrad nach Berger [1] | BET$_{Ar.}$ (m²/g) | XRD[2] Anatas (%) | Rutil (%) |
|---|---|---|---|---|---|---|---|---|---|---|
| 100647 Ti | 7,76 | 1,92 | 63 | 72 | 1,5 | 2,7 | 90,82 | 53 | 83,9 | 16,1 |
| 100654 Ti E | 14,85 | 1,36 | 55 | 62 | 3,8 | 2,8 | 95,68 | 49 | 82,0 | 18,0 |

1) = 12,- g Einwaage

2) = Semiquantitative Röntgendiffraktometrie Angaben in Gew.-%

*Weißgrad Berger*

*Micro Color*

*Geräte*

Polyethylenweithalsflasche, 250 ml
Metallsieb, Maschenweite 0,5 mm
Pulvertrichter
Micro Color, Dr. Lange mit Schutzscheibe D 20

*Durchführung der Messung*

Ca. 3 bis 5 g pyrogenes Oxid werden über ein 0,5-mm-Sieb unter Zuhilfenahme eines Pulvertrichters direkt in eine Polyethylenweithalsflasche (250 ml) abgesiebt. Bei zu starker Aufladung läßt man die Probe ca. 30 Minuten stehen. Anschließend wird die Probe durch Schütteln per Hand homogenisiert (30 sec, die Polyetehylenflasche ist zu Beginn höchstens bis zur Hälfte gefüllt).

Sofort danach läßt man das pyrogene Oxid in die Glasküvette frei einfließen. Eine genaue Masse ist dabei nicht einzuhalten. Die zugegebene Menge sollte in etwa so bemessen sein, daß die Küvette nach einem Egalisieren (das nicht durchgeführt wird) der Oberfläche in etwa randvoll wäre.

*Hydrophobe Produkte*

Die Probe wird anschließend sofort vermessen: Mehrfachmessung: 10, nach fünf Messungen wird die Probe um ca. 90 ° weitergedreht. Der Mittelwert wird mit einer Dezimale ausgewiesen.

*Hydrophile Produkte*

Die Probe wird in der Glasküvette durch leichtes Klopfen mit der Hand 10 mal gestampft (Unterlage: Tissue-Tuch „Hubhöhe: 2-3 cm"). Anschießend wird die Probe, wie bei hydrophoben Produkten beschrieben, vermessen.

**Bestimmung der Sears-Zahl, titriert von pH 4 nach pH 9**

Die Sears-Zahl entspricht dem Verbrauch an 0.1 N NaOH, die benötigt wird, um eine definierte Suspension pyrogener Oxide von pH 4 auf pH 9 einzustellen.

*Durchführung*

2 g pyrogenes Oxid werden in einem 400 ml Becherglas mit 200 ml einer gesättigten NaCl-Lösung versetzt und anschließend 1 min mit einem trockenen Ultra-Turrax-Rührer behandelt. Nach dem Durchrühren wird durch kurzes Anschalten des über der Flüssigkeit gehaltenen Rührers der größte Teil der im Rührerkopf noch befindlichen Lösung an die Becherglaswandung geschleudert. Die außen am Rührer hängenden Tropfen werden durch Abstreifen mit einem Becherglas entfernt.Die so vorbreitete Probe wird in ein doppelwandiges Titriergefäß gegeben. Man spült das Becherglas mit 2 bis 3 ml destilliertem Wasser aus und gibt sie noch zur Lösung im Titriergefäß. Es sollte auf keinen Fall mehr Waschwasser verwendet werden, damit das Volumen der Probe konstant bleibt. Zu dieser Suspension gibt man noch weitere 25 g Natriumchlorid hinzu. Durch den Doppelmantel des Titriergefäßes wird Wasser bei 25 °C gepumpt. Bei der nun folgenden eigentlichen Titration wird zunächst in schneller Tropfenfolge und gegen Ende der Titration wesentlich langsamer 0.1 N-Natronlauge zugegeben, bis der pH-Wert von 9 erreicht ist.

Die Sears-Zahl (pH 4 nach pH 9) entspricht dem Verbrauch an 0.1 N NaOH / Einwaage innerhalb dem angegebenen Bereich des pH-Wertes.

**Bestimmung der Oberflächenladung von Titandioxid**

*Probenvorbereitung*

In eine 100-ml-Pulverglasflasche werden 40 g VE-Wasser sowie 10,0 g Probe eingewogen und 1 h im Turbula-Mischer mit einer Drehzahl von n = 20 Upm homogenisiert. Dies ergibt 42 ml Probe = 50 g = 238 g/l TS (Trockensubstanz). Die Probe wird frisch und nach 48 h vermessen.

*Ladungstitration*

100 μl Suspension werden bei min. 3 verschiedenen pH-Werten (zum Beispiel 3, 6, 9) in 20 ml einer 0,001 molaren KCl-Lösung mittels 0,002 molarer KPVS (Kaliumpolyvinylsulfat) bei positiver bzw. PDDA (Polydiallyldimethylammonchlorid) bei negativer Partikelladung bis zum Ladungsneutralpunkt (= 0 mV) titriert (1 ml 0,002 molare KPVS bzw. PDDA entsprechen 0,195 μCoulomb). Zur Detektion des Ladungsneutralpunktes wird der Partikelladungsdetektor PCD-03 pH der Firma Mütek verwendet.

*Ergebnisse*

Die Oberflächenladungsmenge wird in C/g Trockensubstanz angegeben.

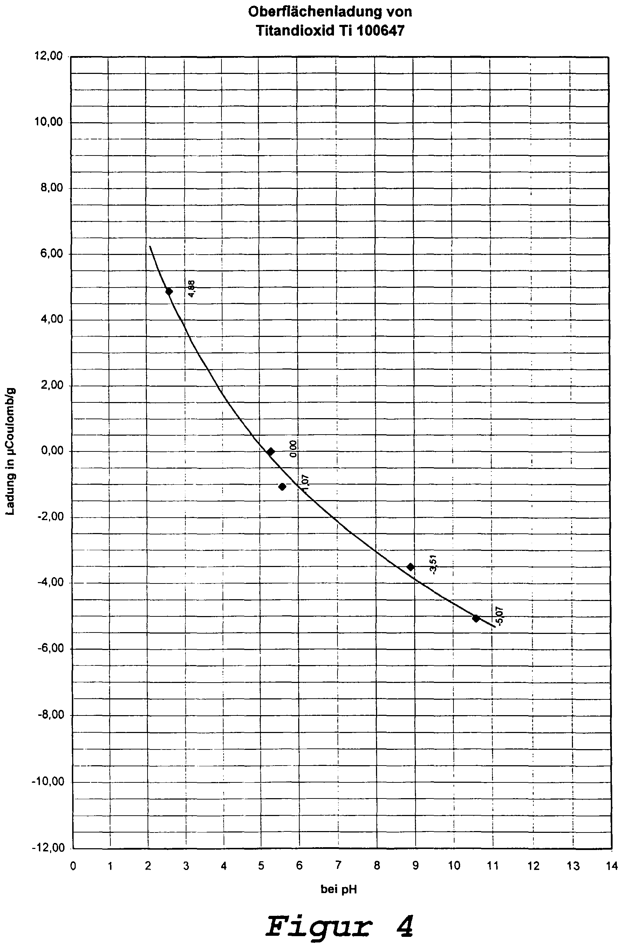

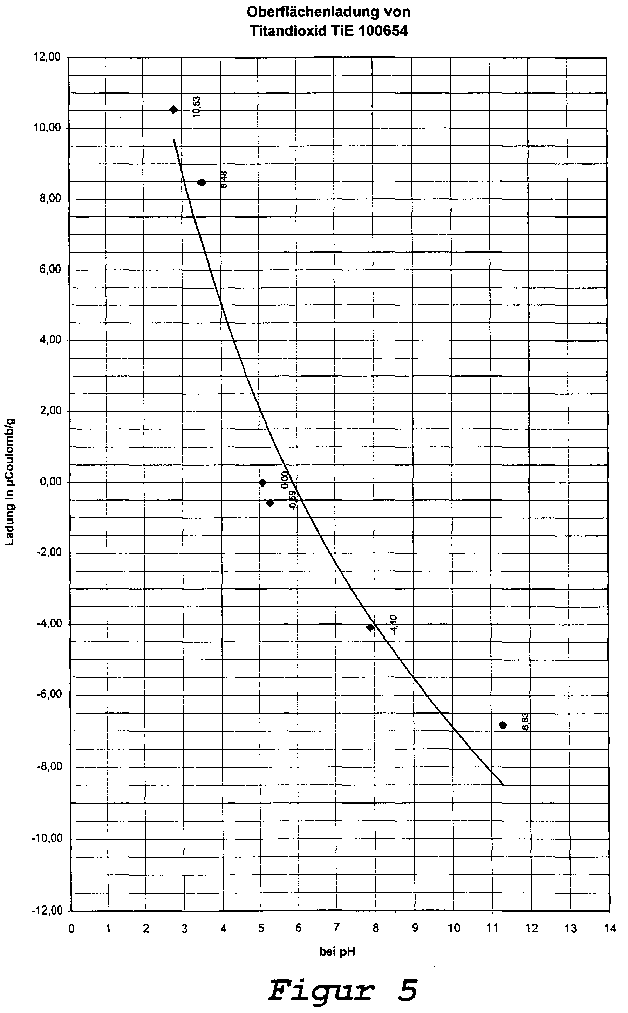

Die Ergebnisse dieser Bestimmung sind in den Figuren 4 und 5 dargestellt. Es zeigen Figur 4 die Oberflächenladung des bekannten Titandioxides und Figur 5 die Oberflächenladung des erfindungsgemäßen Titandioxides.

TV =    Trocknungsverlust (2 h bei 105 °C, in Anlehnung an DIN/ISO 787/II, ASTM D 280, JIS K 5101/21).

GV =    Glühverlust (2 h bei 1000 °C, in Anlehnung an DIN 55921, ASTM D 1208, JIS K 5101/23, bezogen auf die 2 h bei 105 °C getrocknete Substanz).

pH =    pH-Wert in 4-prozentiger wäßriger Suspension.

Stampfdichte in Anlehnung an DIN/ISO 787/XI, JIS K 5101/18 (nicht gesiebt).

**Patentansprüche**

1. Oxide, hergestellt mittels Flammenhydrolyse, dadurch gekennzeichnet, daß die Strukturparameter nach Schulz et al. die folgenden Werte aufweisen:

   $A_{circle}/A_{object}$ größer als 6
   Derivate Length D1 größer als 10

2. Oxide nach Anspruch 1, dadurch gekennzeichnet, daß sie Mischoxide sind.

3. Oxide nach Anspruch 1, dadurch gekennzeichnet, daß sie mit feinteiligem Elektrodenmaterial und/oder dessen Oxiden dotiert sind.

4. Verfahren zur Herstellung von Oxiden nach Anspruch 1 bis 3 durch hydrolytische Umsetzung flüchtiger Metall- und/oder Metalloidverbindungen in einer Flamme, wobei die flüchtigen Verbindungen einzeln oder gemischt im Gemisch mit unter Wasserbildung verbrennenden Gasen und Sauerstoff der Flamme zugeführt werden, wobei solche Mengen an Sauerstoff und brennbarem Gas, daß der Sauerstoffgehalt der Mischung zur vollständigen Verbrennung des brennbaren Gases mindestens ausreicht und das dabei gebildete Wasser zur Hydrolyse der flüchtigen Verbindung mindestens ausreicht, mit der flüchtigen Verbindung homogen gemischt werden und das Gemisch anschließend einer laminaren oder turbulenten Strömung zur und in der Flamme in dieser zur Umsetzung gebracht wird, dadurch gekennzeichnet, daß man während der Flammenhydrolyse extern induzierte elektrische Kräfte einwirken läßt.

5. Verfahren nach Anspruch 4, dadurch gekennzeichnet, daß man extern induzierte elektrische Kräfte während der Ankühlphase auf die gebildeten Oxidpartikel einwirken läßt.

6. Verfahren nach Anspruch 4, dadurch gekennzeichnet, daß man extern induzierte Kräfte an einer beliebigen Stelle der laminaren oder turbulenten Strömung vor, während und/oder nach der Bildung der Oxidpartikel einwirken läßt.

7. Verfahren nach Anspruch 4, dadurch gekennzeichnet, daß man als flüchtige Metallverbindung Titantetrachlorid verwendet.

8. Oxid gemäß Anspruch 1, dadurch gekennzeichnet, daß es ein Titandioxid mit den folgenden Strukturparameter nach Schulz et al.

   $A_{circle}/A_{object}$ größer als 6,

Derivate Length D1 größer als 10,

bevorzugt $A_{circle}/A_{object}$ zwischen 8 und 12 und
Derivate Length D1 zwischen 10 und 20.

ist.

9. Titandioxid gemäß Anspruch 8, dadurch gekennzeichnet, daß es einen Weißgrad nach Berger von größer als 93 aufweist.

10. Titandioxid gemäß Anspruch 8, dadurch gekennzeichnet, daß es mit feinstteiligem Elektrodenmaterial und/oder dessen Oxiden dotiert ist.

11. Verwendung der Oxide gemäß Anspruch 1 als Verdickungsmittel in flüssigen oder pastösen Systemen.

**Zur Abscheidung**

**Flammrohr**

Elektrode                    Elektrode

| - **Hoch-** | | **+ Hoch-** |
| **spannung** | | **spannung** |

Mantel-H$_2$

TiCl$_4$-Dampf
+ Traggas (N$_2$)

Mischkammer

Ofen

Luft
+ Kern-H$_2$

Brenneranordnung

*Figur 1*

TEM-Nr. 89 691 r

100647 Ti
zerrieben und aufgestäubt

*Figur 2*

E-Vergr. 12 000  Ges.Vergr. 50 000:1

TEM-Nr. 89 740 r

100654 Ti E
zerrieben und aufgestäubt

**Figur 3**

E-Vergr. 12 000  Ges.Vergr. 50 000:1

**Oberflächenladung von
Titandioxid Ti 100647**

Figur 4

**Oberflächenladung von
Titandioxid TiE 100654**

*Figur 5*